(19) **Europäisches Patentamt**

**European Patent Office**

**Office européen des brevets**

(11) **EP 1 381 903 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.⁷: **G02B 23/18**

(21) Anmeldenummer: **02742915.8**

(86) Internationale Anmeldenummer:
**PCT/EP2002/004568**

(22) Anmeldetag: **25.04.2002**

(87) Internationale Veröffentlichungsnummer:
**WO 2002/088821 (07.11.2002 Gazette 2002/45)**

(54) **FERNGLAS, INSBESONDERE TASCHENFERNGLAS**

BINOCULARS, PARTICULARLY POCKET BINOCULARS

JUMELLES, NOTAMMENT JUMELLES DE POCHE

(84) Benannte Vertragsstaaten:
**AT CH DE GB LI**

(30) Priorität: **27.04.2001 DE 10121075**
**27.10.2001 DE 10153167**

(43) Veröffentlichungstag der Anmeldung:
**21.01.2004 Patentblatt 2004/04**

(73) Patentinhaber: **Hensoldt AG**
**35573 Wetzlar (DE)**

(72) Erfinder:
• **LUTHARDT, Dirk**
**35581 Wetzlar (DE)**

• **POLZER, Gerd**
**35586 Wetzlar (DE)**
• **RADEMACHER, Martin**
**96269 Grossheirath (DE)**
• **PAVLIC, Davor**
**96450 Coburg (DE)**
• **MALTER, Gerd**
**96528 Effelder-Rauenstein (DE)**

(74) Vertreter: **Gnatzig, Klaus**
**Carl Zeiss**
**Patentabteilung**
**73446 Oberkochen (DE)**

(56) Entgegenhaltungen:
**US-A- 4 171 865      US-A- 5 305 141**

**Beschreibung**

Die Erfindung betrifft ein Fernglas, insbesondere Taschenfernglas gemäß dem Oberbegriff des Patentanspruchs 1.

Aus der DE 41 24 584 C2 ist ein binokulares Fernrohr bzw. Fernglas bekannt, das ein Fokussiertreibrad aufweist, das zum Fokussieren gedreht wird. Das Fokussiertreibrad ist mit einem als Schraubengewinde ausgebildeten Innengewinde versehen. Diese Schraubenverzahnung steht in Eingriff mit einer Außenverzahnung eines Brückenteil. Das Brückenteil ist axial verschiebbar und drehfest gelagert, so daß durch Drehung des Fokussiertreibrades eine Axialbewegung des Brückenteils resultiert. Mit dem Brückenteil sind Schubstangen fest verbunden. Mit diesen Schubstangen sind Fokussierlinsen bzw. Fokussierlinsengruppen über Mitnehmer axial formschlüssig verbunden.

Die US 4171865 beschreibt ein Fernglas mit einem Drehelement zur Verschiebung der Linsen, wobei die Übertragung der Bewegung mittels eines Zahnradgetriebes und einer Führungsnut geschieht.

Nachteilig ist bei dieser Konstruktion, daß der mittels dieser Konstruktion bei entsprechender Baugröße und komfortabler Bedienbarkeit erreichbare Stellweg der Fokussierlinsen bzw. der Fokussieroptiken in axialer Richtung begrenzt ist. Um jedoch eine Fokussierung über einen großen Entfernungsbereich zu ermöglichen, ist es erforderlich, daß auch die Fokussierlinsen einen großen Stellweg in axialer Richtung ausführen können.

Der Erfindung liegt die Aufgabe zugrunde, ein Fernglas derart weiter zu entwickeln, daß bei komfortabler Bedienbarkeit und kompakten Aufbau des Fernglases der Bereich, über den fokussiert werden kann, vergrößert ist.

Durch die Maßnahme ein Fernglas gemäß Anspruch 1 mit einem Drehelement zu versehen, wobei aus einer Drehbewegung des Drehelementes mittels einer Schraubverzahnung eine Axialbewegung von axial verschiebbar gelagerten Linsen resultiert, die für die Fokussierung vorgesehen sind und wobei das Drehelement über Zwischenschaltung einer Übersetzungsstufe mit der Schraubverzahnung in Wirkverbindung steht, kann eine Vergrößerung des möglichen Stellweg der Fokussierlinsen in axialer Richtung bereitgestellt werden. Mittels der Übersetzungsstufe wird die Drehbewegung des Drehelementes in eine Mehrfachdrehung des mit der Schraubverzahnung versehenen Elementes überführt.

Durch den Einsatz dieser Übersetzungsstufe ist es somit möglich eine Steigerung des Fokussierbereichs über den Bereich hinaus zu erreichen, der durch eine aus technischen Gründen maximal mögliche bzw. sinnvolle Steigung des Schraubengewindes erreichbar ist.

Es wirkt sich insbesondere auf die Bedienerfreundlichkeit aus, daß dieser vergrößerte axiale Stellweg der Fokussierlinsen bereitgestellt werden kann, ohne daß der vom Drehelement zurückzulegende Drehwinkel vergrößert werden muß. Besonders vorteilhaft ist es, wenn der gesamte Fokussierbereich durchfahren werden kann, ohne daß der Benutzer häufig umgreifen muß.

Weiterhin wird durch den Einsatz der Übersetzungsstufe erreicht, daß trotz großem Fokussierbereich weiterhin eine feinfühlige Fokussierung möglich ist. Es hat sich insbesondere als vorteilhaft herausgestellt diese Übersetzungsstufe zweistufig auszuführen. Mit solchen mehrstufigen Übersetzungsstufen läßt sich eine gewünschte Feinfühligkeit, insbesondere bei wenig zur Verfügung stehendem Bauraum, günstiger erreichen.

Es hat sich als vorteilhaft herausgestellt, eine Übersetzungsstufe zu verwenden, deren Abtriebsteil mindestens den mehrfachen Winkelweg, insbesondere zweifachen Winkelweg des Eingangsteils der Übersetzungsstufe, hier des Drehelementes, zurücklegt. Dadurch wird der maximal mögliche Fokussierbereich um den Faktor zwei, zweieinhalb, drei usw. vergrößert.

Es hat sich als vorteilhaft herausgestellt, daß das Abtriebsteil der Übersetzungsstufe maximal den vierfachen Winkelweg des Drehelementes ausführt. Dadurch wird sichergestellt, daß weiterhin mittels des Drehelementes ausreichend feinfühlig fokussiert werden kann. Insbesondere ist es möglich mittels der Erfindung eine Feinfühligkeit von mindestens 12,5 bereitzustellen, wobei für die Feinfühligkeit gilt:

$$\frac{Betätigungsweg}{Abtriebsweg} = \text{Feinfühligkeit}$$

Es hat sich als vorteilhaft herausgestellt, die Übersetzungsstufe innerhalb des Drehelementes anzuordnen, wodurch ein kompakt gebautes Fernglas, insbesondere Taschenfernglas, bereitgestellt werden kann.

Es hat sich als vorteilhaft herausgestellt, eine zentrale Verstellwelle vorzusehen, mit der die Linsen der Fokussiereinrichtung axial formschlüssig in Wirkverbindung stehen. Es hat sich als vorteilhaft herausgestellt, die Verstellwelle auf der Gelenkachse des Fernglases anzuordnen. In einem bevorzugten besonders kompakten Ausführungsbeispiel ist die Verstellwelle in einer Gelenkhülse des Fernglases gelagert.

Weitere vorteilhafte Maßnahmen sind in weiteren Unteransprüchen beschrieben. Anhand des folgenden Ausführungsbeispiels wird die Erfindung näher beschrieben.

Es zeigt:

Figur 1:   Taschenfernglas;

Figur 2:   Schnitt entlang B-B, wie in Figur 6 dargestellt, durch die Gelenkachse des Taschenfernglases;

Figur 3: Drehelement mit Übersetzungsstufe im Längsschnitt dargestellt;

Figur 4: Schnittdarstellung durch das Drehelement entlang E-E;

Figur 5: Schnittdarstellung durch das Drehelement entlang D-D;

Figur 6: Schnittdarstellung durch das Fernglas entlang G-G; und

Figur 7: Schnittdarstellung durch das Fernglas entlang H-H.

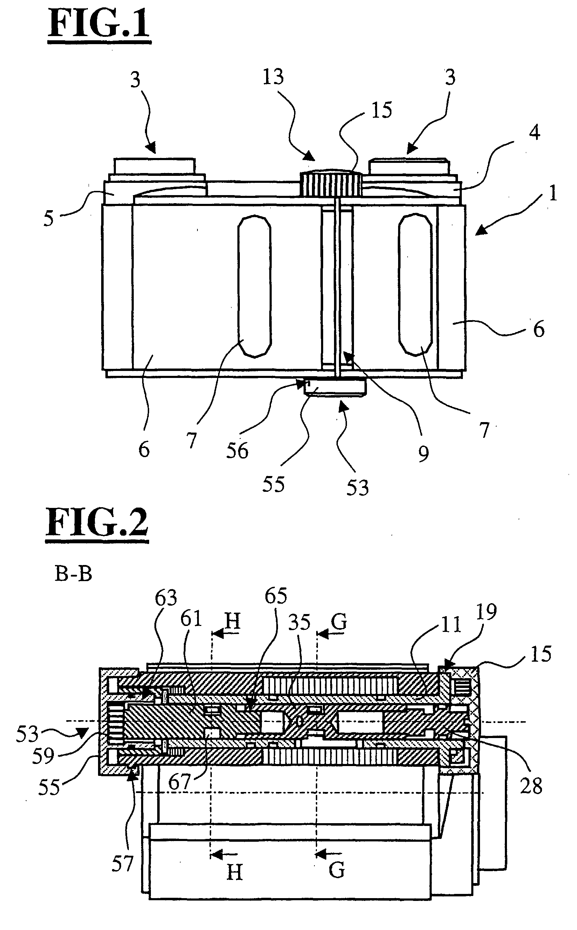

Anhand von Figur 1 wird zunächst der prinzipielle Aufbau des Taschenfernglases 1 beschrieben. Das Gehäuse des Taschenfernglases 1 ist zweiteilig mit einem ersten Gehäuseteil 4 und einem weiteren Gehäuseteil 5 ausgeführt. Beide Gehäuseteile sind drehbar auf der Gelenkhülse 11 (siehe Fig.2) gelagert. Durch Verdrehen der Gehäuseteile 4, 5 gegeneinander, ist der relative Abstand der Okulare 3 bzw. der den Okularen 3 zugeordneten optischen Achsen des Taschenfernglases 1 veränderbar. Diese Gehäuseteile sind mit einem Bezug 6 versehen, in denen die Griffmulden 7 ausgebildet sind.

An beiden Enden der Gelenkachse 9 sind Bedienelemente angeordnet. Das auf der dem Benutzer zugewandten Seite angeordnete Bedienelement, hier ein Drehelement 15, ist Bestandteil einer Fokussiereinrichtung 13. Das am dem gegenüberliegenden Ende der Gelenkachse 9 angeordnete Bedienelement, hier ein Drehknopf 55, ist Bestandteil eines Dioptrinausgleichs 53. Die Anordnung dieser Bedienelemente ist auch in umgekehrter Anordnung möglich. Weiterhin ist auch die Anordnung der Bedienelemente an einer anderen Position auf der Gelenkachse möglich.

Außen sind die Gehäuseteile 4,5 des Taschenfernglases 1 jeweils mit einem schützenden Bezug 6 versehen, in dem Griffmulden 7 ausgebildet sind.

In Figur 2 ist ein Schnitt durch die Gelenkachse 9 dargestellt. Anhand dieser Figur 2 wird die Funktionsweise der Fokussiereinrichtung 13 und des Dioptrinausgleichs 53 beschrieben. Die Fokussiereinrichtung 13 weist ein Drehelement 15 auf, das mit einer Innenverzahnung, hier Geradverzahnung, versehen ist. Diese Verzahnung steht in Eingriff mit einer Außenverzahnung eines innen und außen verzahnten Ringes 21. Dieser innen und außen verzahnte Ring 21 steht in Eingriff mit einer Außenverzahnung eines Stirnrades 29. Anstelle der Geradverzahnungen könnten hier auch Schrägverzahnungen vorgesehen werden.

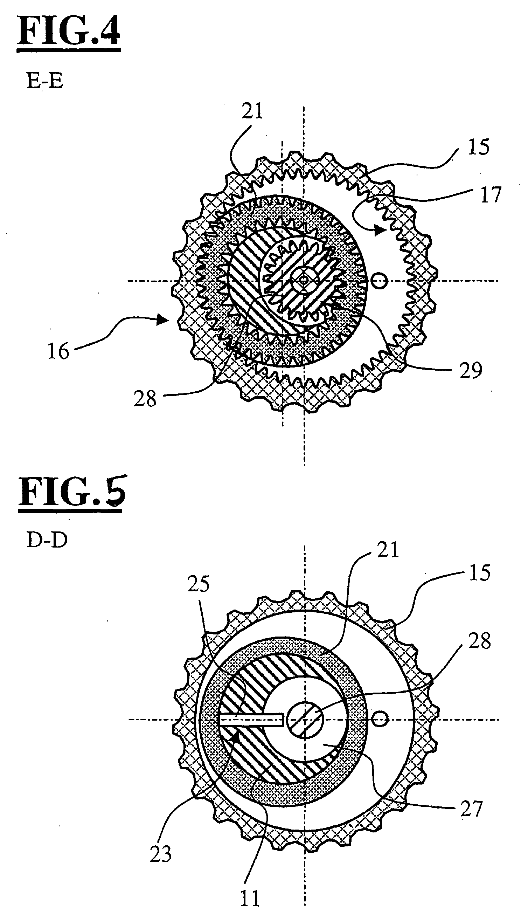

Die Anordnung von Drehelement 15, innen und außen verzahntem Ring 21 und Sonnenrad 29, das als Abtriebsteil 28 der Übersetzungsstufe 16 fungiert, ist insbesondere deutlich aus Figur 4 zu entnehmen. Bei dem dargestellten Ausführungsbeispiel weist das Drehelement 15 eine Innenverzahnung mit 56 Zähnen auf. Der innen und außen verzahnte Ring 21 weist eine Außenverzahnung mit 44 Zähnen und eine Innenverzahnung mit 32 Zähnen auf. Das Sonnenrad 29 ist mit einer Außenverzahnung mit 20 Zähnen versehen. Daraus resultiert eine Gesamtübersetzung von 2,04. Durch die Wahl der Zahnverhältnisse der Verzahnungen von Drehelement 15, innen und außen verzahntem Ring 21 und Sonnenrad 29 kann ein gewünschtes Übersetzungsverhältnis realisiert werden.

Bei diesem Übersetzungsverhätnis beträgt die Feinfühligkeit 12,5, wobei bei einem Betätigungsweg von 1mm am Drehknaopf im Bogenmaß die Linse um 0,08 mm in axialer Richtung verschoben wird. Dieser Stellweg der Fokussierlinse entspricht 0,5 Dioptrin. Der maximale Verstellweg der Fokussierlinsen beträgt 5,6mm, was einer Drehung von 445° am Drehelement entspricht.

Zur Axialfixierung des Abtriebsteils 28 mit Zahnrad ist eine Axialsicherung 23, wie in Figur 5 dargestellt, vorgesehen. Zur Axialsicherung greift ein Stift 25 in eine in dem Abtriebsteil 28 ausgebildete Ringnut 27 ein. Der Stift 25 ist fest mit der Gelenkhülse 11 verbunden. Die axiale Sicherung des innen und außen verzahten Ringes 21 erfolgt über das Drehelement 15, das axial au der Gelenkhülde 11 gelagert ist. Der innen und außen verzahnte Ring 21 selbst ist radial auf der in diesem Bereich exzentrisch ausgebildeten Gelenkhülse 11 gelagert. Dadurch ist gewährleistet, daß der innen und außen verzahnte Ring 21 einerseits mit der Verzahnung des Drehelementes 15 und andererseits mit der Verzahnung des Sonnenrades 29 stets in Eingriff steht.

Das Sonnenrad 29 ist koaxial zur Gelenkachse 9 des Taschenfernglases 1 angeordnet. Durch einen nach innen weisenden Vorsprung des Drehelementes 15, der in eine in dem Sonnenrad 29 ausgebildete Ausnehmung eingreift, wird das Drehelement 15 endseitig gelagert. Das Sonnenrad 29 weist einen Wellenfortsatz 31 auf, der in einer Gelenkhülse 11 gelagert ist, die koaxial zur Gelenkachse 9 angeordnet ist. Der Wellenfortsatz 31 ist mit einer Schraubenverzahnung 33 versehen, die mit einer an einer Verstellwelle 35 ausgebildeten Schraubverzahnung 37 in Eingriff steht. Die Verstellwelle 35 ist ebenfalls in der Gelenkhülse 11 gelagert.

In dem dargestellten Ausführungsbeispiel ist die in der Verstellwelle 35 ausgebildeten Schraubenverzahnung 37 als Innengewinde ausgebildet, wobei die Schraubenverzahnung 33 des Wellenfortsatzes 31 als Außengewinde ausgebildet ist. Es ist jedoch genauso möglich, die Anordnung der Schraubenverzahnungen 33, 37 von Verstellwelle 35 und Wellenfortsatz 31 zu vertauschen, so daß die Verstellwelle mit einer Außengewinde ausgebildet wäre, die in eine mit einer Innengewinde versehene Ausnehmung des Wellenfortsatzes eingreift.

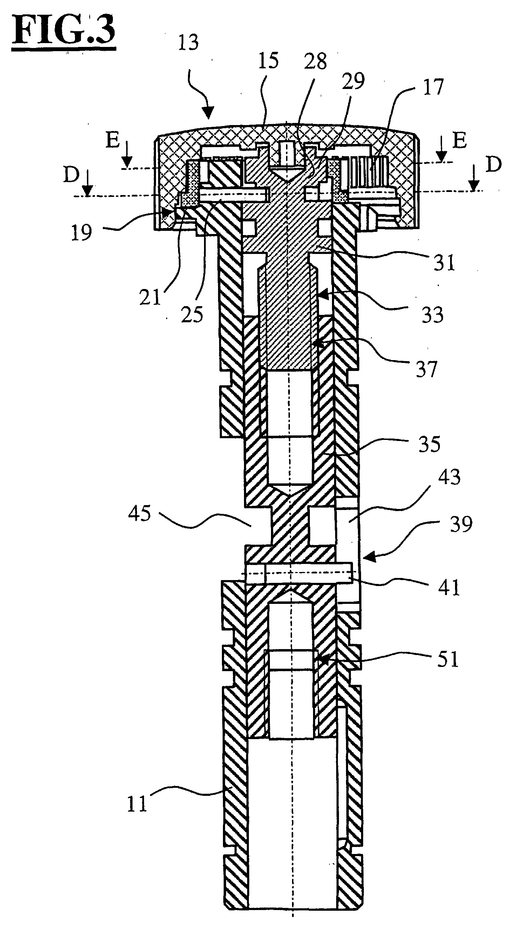

Die in der Gelenkhülse 11 gelagerte Verstellwelle 35 ist axial verschiebbar und durch eine Drehsicherung 39 gegen Drehbewegungen gesichert. Als Drehsicherung ist ein Stift 41 vorgesehen, der fest mit der Verstellwelle 35 verbunden ist. Dieser Stift 41 greift in einen Längsschnitt 43, der in der der Gelenkhülse 11 ausgebildet ist, ein. Diese Anordnung geht insbesondere deutlich aus Figur 3 hervor.

Auf der dem Drehelement 15 abgewandten Ende der Verstellwelle 35 ist die Verstellwelle 35 mit einer weiteren Schraubenverzahnung 51 versehen. Diese Schraubenverzahnung 51 ist wiederum als Innengewinde ausgebildet. In diese Schraubenverzahnung 51 greift eine Schraubenverzahnung 65 einer Welle 61 ein. Wird die Welle 61 rotatorisch angetrieben, so schraubt sich die Welle 61 in die Verstellwelle 35 hinein oder je nach Drehrichtung heraus. Diese Welle 61 ist dem Dioptrinausgleich zuzuordnen. Auch diese Welle 61 ist in der Gelenkhülse 11 gelagert. Endseitig ist diese Welle 61 mit einer Geradverzahnung 63 versehen, die in eine Geradverzahnung 59 des Drehknopfes 55 des Dioptrienausgleichs 53 eingreift. Durch Drehung des Drehknopfes 55 wird die Welle 61 aufgrund der in Eingriff befindlichen Längsverzahnungen 59 und 63, in Rotation versetzt. Sowohl der Drehknopf 55 ist mit einer Axialsicherung 57 versehen, als auch das Drehelement 15 ist mit einer Axialsicherung 19 versehen ist. Hier schnappen beide Drehknöpfe 15 und 55 in eine in der Gelenkhülse ausgebildeten Ringnut ein und sind damit auf der Gelenkhülse 11 axial fixiert.

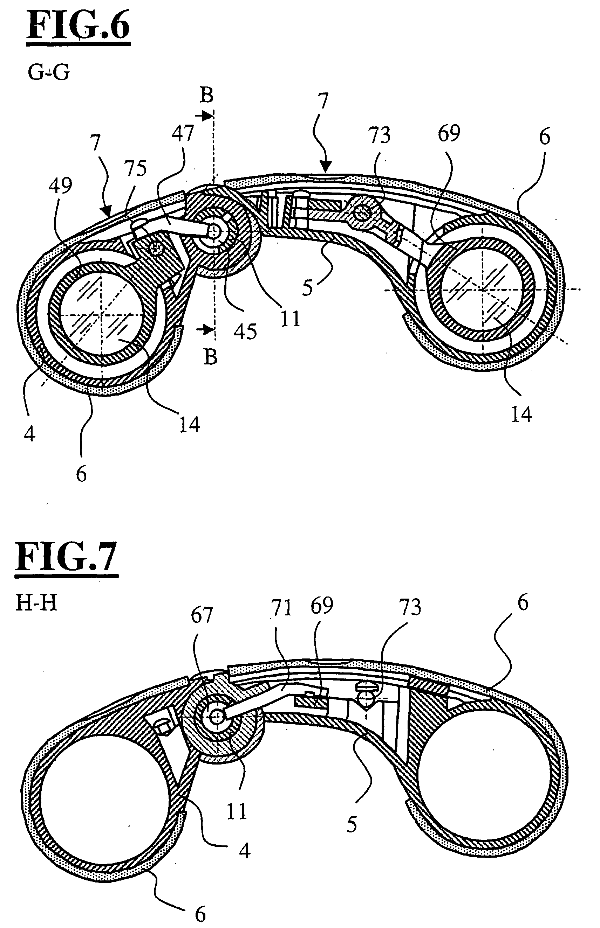

Wird nun eine Drehbewegung über das Drehelement 15 eingeleitet, so führt die Verstellwelle 35 zusammen mit der Welle 61 eine Axialbewegung aus. Wie aus Figur 6 zu entnehmen ist, greift in eine in der Verstellwelle 35 ausgebildete Ringnut 45 ein Eingriffselement 47 axial formschlüssig ein. Dieses Eingriffselement 47 ist fest mit einer Linsenfassung 49 verbunden. Diese Linsenfassung 49 trägt eine Linse 14, die bei der Fokussierung in axialer Richtung verschoben wird. Die Linsenfassung 49 ist auf einer Lagerwelle 75 axial verschiebbar gelagert. Ein weiteres Eingriffselement 71 greift axial formschlüssig in eine in der Welle 61 ausgebildete Ringnut 67 ein. Dieses Eingriffselelent 71 ist fest mit einer Linsenfassung 69, die axial verschiebbar auf einer Lagerwelle 73 gelagert ist, verbunden. Diese Linsenfassung 69 trägt eine weitere Linse 14, die ebenfalls zur Fokussierung in axialer Richtung verschoben wird. Diese Linse ist jedoch auch durch Betätigung des Drehknopfes 55 des Dioptrienausgleichs 53 in axialer Richtung verschiebbar, wobei bei Betätigung des Diotrienausgleichs der relative Abstand der beiden Linsen 14 verändert wird.

Bezugszeichenliste:

1    Taschenfernglas
3    Okular
4    Gehäuseteil
5    Gehäuseteil
6    Bezug
7    Griffmulden
9    Gelenkachse
11   Gelenkhülse
13   Fokussiereinrichtung
14   Linsen
15   Drehelement
16   Übersetzungsstufe
17   Innenverzahnung
19   Axialsicherung
21   innen und außen verzahnter Ring
23   Axialsicherung
25   Stift
27   Ringnut
28   Abtriebsteil
29   Sonnenrad
31   Wellenfortsatz
33   Schraubenverzahnung
35   Verstellwelle
37   Schraubenverzahnung
39   Drehsicherung
41   Stift
43   Längsschlitz
45   Ausnehmung, Ringnut
47   Eingriffselement
49   Linsenfassung
51   Schraubenverzahnung
53   Dioptrinausgleich
55   Drehknopf
56   ,Markierung
57   Axialsicherung
59   Längsverzahnung
61   Welle
63   Längsverzahnung
65   Schraubenverzahnung
67   Ringnut
69   Linsenfassung
71   Eingriffselement
73   Lagerwelle
75   Lagerwelle

**Patentansprüche**

1. Fernglas, insbesondere Taschenfernglas, mit einem Drehelement, durch dessen Betätigung axial verschiebbar gelagerte Linsen zur Fokussierung verschoben werden, wobei die über das Drehelement (15) eingeleitete Drehbewegung mittels einer Übersetzungsstufe (16) in eine Drehbewegung mit einem größeren Drehwinkel übersetzt wird, **dadurch gekennzeichnet, dass** die Übersetzungsstufe (16) ein Planetengetriebe ist, das mindestens ein ortsfest und drehbar gelagertes Planetenrad aufweist.

2. Fernglas nach Anspruch 1, **dadurch gekennzeichnet, daß** das Drehelement (15) das Eingangsteil der Übersetzungsstufe (16) ist und daß bei Drehung des Drehelementes (15) ein Abtriebsteil (28) der Übersetzungsstufe (16) mindestens den zweifachen Winkelweg zurücklegt.

3. Fernglas nach Anspruch 1 oder Anspruch 2, **dadurch gekennzeichnet, daß** das Abtriebsteil (28) der Übersetzungsstufe (16) maximal den vierfachen Winkelweg des Drehelementes (15) ausführt.

4. Fernglas nach Anspruch 1, **dadurch gekennzeichnet, daß** die Übersetzungsstufe (16) ein Sonnenrad (29) umfaßt, das über einen doppelt verzahnten Ring (21) mit dem Drehelement (15) verbunden ist.

5. Fernglas nach mindestens einem der vorangegangenen Ansprüche, **dadurch gekennzeichnet, daß** die Übersetzungsstufe (16) in dem Drehelement (15) angeordnet ist.

6. Fernglas nach Anspruch 2 oder Anspruch 3, **dadurch gekennzeichnet, daß** das Abtriebsteil der Übersetzungsstufe (16) mit einem Wellenfortsatz (31) fest verbunden ist.

7. Fernglas nach mindestens einem der vorangegangenen Ansprüche, **dadurch gekennzeichnet, daß** eine zentrale Verstellwelle (35) vorgesehen ist, die bei Betätigung des Drehelementes (15) eine axiale Bewegung ausführt, die der Axialbewegung der Linsen (14) entspricht.

8. Fernglas nach Anspruch 7, **dadurch gekennzeichnet, daß** die Verstellwelle (35) auf einer Gelenkachse (9) des Fernglases (1) angeordnet ist.

9. Fernglas nach Anspruch 8, **dadurch gekennzeichnet, daß** die Verstellwelle (35) in einer Gelenkhülse (11) axial verschiebbar gelagert ist.

10. Fernglas nach mindestens einem der Ansprüche 7 bis 9, **dadurch gekennzeichnet, daß** die Verstellhülse (35) mit einer Drehsicherung (39) versehen ist.

11. Fernglas nach Anspruch 7 oder nach Anspruch 9, **dadurch gekennzeichnet, daß** die Verstellwelle (35) an beiden Enden mit einer Schraubverzahnung (51, 65) versehen ist.

12. Fernglas nach mindestens einem der Ansprüche 7 bis 11, **dadurch gekennzeichnet, daß** die Verstellwelle (35) mit einer Welle (61) eines Dioptrinausgleichs (53) in Wirkverbindung steht.

**Claims**

1. Binoculars, in particular pocket binoculars, having a rotary element which can be actuated to displace axially displaceably mounted lenses for focusing purposes, the rotary movement which is initiated via the rotary element (15) being converted by means of a transmission stage (16) into a rotary movement with a larger angle of rotation, **characterized in that** the transmission stage (16) is a planet gear mechanism which has at least one planet wheel mounted in a fixed position such that it can be rotated.

2. Binoculars according to Claim 1, **characterized in that** the rotary element (15) is the input part of the transmission stage (16), and **in that**, when the rotary element (15) is rotated, an output part (28) of the transmission stage (16) covers at least twice the angular distance.

3. Binoculars according to Claim 1 or Claim 2, **characterized in that** the output part (28) of the transmission stage (16) executes, at most, four times the angular distance of the rotary element (15).

4. Binoculars according to Claim 1, **characterized in that** the transmission stage (16) comprises a sun wheel (29) which is connected to the rotary element (15) via a ring (21) with double toothing.

5. Binoculars according to at least one of the preceding claims, **characterized in that** the transmission stage (16) is arranged in the rotary element (15).

6. Binoculars according to Claim 2 or Claim 3, **characterized in that** the output part of the transmission stage (16) is fixed to a shaft extension (31).

7. Binoculars according to at least one of the preceding claims, **characterized in that** a central adjusting shaft (35) is provided, this executing, upon actuation of the rotary element (15), an axial movement which corresponds to the axial movement of the lenses (14).

8. Binoculars according to Claim 7, **characterized in that** the adjusting shaft (35) is arranged on an articulation spindle (9) of the binoculars (1).

9. Binoculars according to Claim 8, **characterized in that** the adjusting shaft (35) is mounted in an axially displaceable manner in an articulation sleeve (11).

10. Binoculars according to at least one of Claims 7 to 9, **characterized in that** the adjusting sleeve (35) is provided with a rotation-prevention means (39).

**11.** Binoculars according to Claim 7 or according to Claim 9, **characterized in that** the adjusting shaft (35) is provided with a helical toothing formation (51, 65) at both ends.

**12.** Binoculars according to at least one of Claims 7 to 11, **characterized in that** the adjusting shaft (35) is operatively connected to a shaft (61) of a dioptric compensation means (53).

**Revendications**

**1.** Jumelles, notamment jumelles de poche, comprenant un élément rotatif dont l'actionnement déplace des lentilles montées de manière coulissante axialement en vue de la focalisation, le mouvement de rotation amorcé par le biais de l'élément rotatif (15) étant converti au moyen d'un rapport de développement (16) en un mouvement de rotation avec un plus grand angle de rotation, **caractérisées en ce que** le rapport de développement (16) est un engrenage planétaire qui présente au moins une roue planétaire fixe et une roue planétaire rotative.

**2.** Jumelles selon la revendication 1, **caractérisées en ce que** l'élément rotatif (15) est la partie d'entrée du rapport de développement (16) et **en ce que** lors de la rotation de l'élément rotatif (15), une partie de sortie (28) du rapport de développement (16) couvre au moins deux fois la distance angulaire.

**3.** Jumelles selon la revendication 1 ou 2, **caractérisées en ce que** la partie de sortie (28) du rapport de développement (16) réalise au maximum quatre fois la distance angulaire de l'élément rotatif (15).

**4.** Jumelles selon la revendication 1, **caractérisées en ce que** le rapport de développement (16) comprend une roue solaire (29) qui est connectée par le biais d'une bague à double denture (21) à l'élément rotatif (15).

**5.** Jumelles selon au moins l'une quelconque des revendications précédentes, **caractérisées en ce que** le rapport de développement (16) est disposé dans l'élément rotatif (15).

**6.** Jumelles selon la revendication 2 ou la revendication 3, **caractérisées en ce que** la partie de sortie du rapport de développement (16) est connectée fixement à un prolongement de tige (31).

**7.** Jumelles selon au moins l'une quelconque des revendications précédentes, **caractérisées en ce que** l'on prévoit une tige de réglage centrale (35) qui effectue un mouvement axial lors de l'actionnement de l'élément rotatif (15), lequel correspond au mouvement axial des lentilles (14).

**8.** Jumelles selon la revendication 7, **caractérisées en ce que** la tige de réglage (35) est disposée sur un axe d'articulation (9) des jumelles (1).

**9.** Jumelles selon la revendication 8, **caractérisées en ce que** la tige de réglage (35) est montée de manière à pouvoir coulisser axialement dans une douille d'articulation (11).

**10.** Jumelles selon au moins l'une quelconque des revendications 7 à 9, **caractérisées en ce que** la tige de réglage (35) est pourvue d'une fixation contre la rotation (39).

**11.** Jumelles selon la revendication 7 ou selon la revendication 9, **caractérisées en ce que** la tige de réglage (35) est pourvue aux deux extrémités d'une denture hélicoïdale (51, 65).

**12.** Jumelles selon au moins l'une quelconque des revendications 7 à 11, **caractérisées en ce que** la tige de réglage (35) est en liaison coopérante avec une tige (61) d'une correction dioptrique (53).

# FIG.1

# FIG.2

B-B

# FIG.3

# FIG.4

E-E

# FIG.5

D-D

# FIG.6

G-G

# FIG.7

H-H